# EUROPEAN PATENT SPECIFICATION

(11) **EP 3 122 184 B1**
(45) Date of publication and mention of the grant of the patent: **15.09.2021**
(21) Application number: 15769881.2
(22) Date of filing: 05.03.2015
(51) Int. Cl.: A01N 25/28, A01N 43/80, A01P 13/02

(54) **CLOMAZONE MICROCAPSULES, THEIR PREPARATION AND USE**
CLOMAZONMIKROKAPSELN, DEREN HERSTELLUNG UND VERWENDUNG
MICROCAPSULES DE CLOMAZONE, LEURS PRÉPARATION ET UTILISATION

(30) Priority: 26.03.2014 GB 201405412
(43) Date of publication of application: 01.02.2017
(73) Proprietor: JIANGSU ROTAM CHEMISTRY CO., LTD, Economic & Technical Development Zone, Kunshan, Jiangsu 215301 (CN)
(72) Inventor: BRISTOW, James Timothy, Hong Kong (CN); WU, Yifan, Hong Kong (CN)
(74) Representative: Akers, Noel James
(86) International application number: PCT/CN2015/073674
(87) International publication number: WO 2015/143974

(56) References cited:
- WO-A2-2013/105107
- CN-A- 102 669 115
- US-A1- 2012 157 315
- US-A1- 2012 245 027
- YAN-RUI GE ET AL: "Study on pre-polymerization condition of clomazone herbicide microcapsules by in-situ polymerization", JOURNAL OF HEBEI UNIVERSITY OF SCIENCE AND TECHNOLOGY, vol. 31, no. 2, 1 April 2010 (2010-04-01), pages 160-164, XP055388962, DOI: http://xuebao.hebust.edu.cn/hbkjdxen/ch/re ader/create_pdf.aspx?file_no=20100216&year _id=2010&quarter_id=2&falg=1
- Ge ET AL: "Preparation of the Microcapsule Agent of Clomazone Urea- formaldehyde Resin", Journal of Auhui Agricultural Sciences, 30 April 2010 (2010-04-30), pages 12181-12183, XP055227540, Retrieved from the Internet: URL:http://jglobal.jst.go.jp/public/201602 299353749023 [retrieved on 2015-11-11]
- GE, YANRUI ET AL.: 'Preparation of the Microcapsule Agent of Clomazone Urea- formaldehyde Resin' JOURNAL OF AUHUI AGRICULTURAL SCIENCES vol. 38, no. 22, 30 April 2010, pages 12181 - 12183, XP055227540
- GE, YANRUI ET AL.: 'Preparation of the Microcapsule Agent of Clomazone Urea- formaldehyde Resin' JOURNAL OF AUHUI AGRICULTURAL SCIENCES vol. 38, 30 April 2010, pages 12181 - 12183, XP055227540
- LIU, WENGUANG: 'Microcapsule Suspensions' MODERN PESTICIDE FORMULATIONS AND PROCESSING TECHNOLOGIES XP008185350
- None

## Description

The present invention relates to a composition comprising microencapsulated clomazone. The present invention further relates to a method of preparing the composition and the use thereof, in particular in the control unwanted plant growth.

Clomazone, (2-[(2-chlorophenyl)methyl]-4,4-dimethyl-3-isoxazolidinone) is a commercially available and well-known herbicide, active for controlling unwanted plant growth in soybean, cotton, cassava, corn, rapeseed, sugar cane, tobacco and other crops. Clomazone has strong inhibitory effect on such unwanted plants as barnyard grass, green foxtail, crabgrass, Solanum nigrum, Elsholtzia water spine needle, Thlaspi arvense, willow thorn smartweed, cocklebur, pigweed,wild watermelon seedlings, wolf grass and other annual grass and broadleaf weeds, perennial Cephalanoplos Daji, horsetail, Sonchus Caideng.

The commercially available Clomazone formulation currently available is an emulsion concentration. Such a formulation has the following disadvantages:
1. The formulation contains large amounts of organic solvents such as toluene, xylene, the presence of which is a waste of resources and contributes to serious pollution of the environment;
2. Clomazone has a relatively high vapor pressure and is volatile, leading to a low utilization in use, which leads to high dosages being applied in the field and to a high cost;
3. Clomazone is subject to drift away from the locus of application, which harms adjacent sensitive crops to which Clomazone is phytotoxic. To avoid such vapor drift hazards, the mechanical spraying of Clomazone formulations onto the ground needs to be conducted very carefully, in particular at low pressure, using large amounts of water spray, selecting conditions with little or no wind, and spraying twice per day. When applying the formulation, it is necessary to pay attention to the wind direction, wind speed. Particular care is required to avoid sensitive crops, such as fruit trees and vegetables. Aerial spraying of the current Clomazone formulations is not feasible.

Microencapsulation of Clomazone overcomes the drawbacks of the known emulsion concentrate formulations discussed above.

Accordingly, there is a need for improved microencapsulated formulations of Clomazone.

WO 2013/105107 discloses a variable release water dispersible granule composition.

CN 102669115 discloses a microcapsule suspension containing pendimethalin and clomazone, together with the preparation thereof.

The preparation of microcencapsulated clomazone is described by Ge, Y-R., et al., 'Study on pre-polymerization condition of clomazone herbicide microcapsules by in-situ polymerization', Journal of Hebei University of Science and Technology, vol. 31, No. 2, pages 160 to 164.

The preparation of microcencapsulated clomazone is described by Ge, Y-R., et al., 'Preparation of Microcapsule Agent of Clomazone Urea-formaldehyde Resin', Journal of Aufui Agricultural Sciences, pages 12181 to 12183.

US 2012/0157315 discloses agrochemical formulations of microcapsules for compounds containing carboxamide groups.

US 2012/0245027 discloses microcapsules with acetylene carbamide-polyurea polymers and formulations thereof for controlled release.

According to the present invention, there is provided a composition comprising clomazone contained within a microcapsule having a shell comprising a urea-formaldehyde resin crosslinked with glycoluril resin as crosslinking agent.

The composition of the present invention comprises an active ingredient, in particular Clomazone, retained within a microcapsule. The microcapsule has a capsule wall or shell comprising a urea-formaldehyde resin crosslinked with glycoluril resin as crosslinking agent. The resin is a polymerization reaction product of urea-formaldehyde prepolymer and a cross-linking agent. These microcapsules have the following advantages:
1. High stability;
2. Improved ability to control the release rate of the capsule;
3. Reduces drift of the active ingredient, in particular Clomazone;
4. High efficiency in delivering the active ingredient to the target locus;
5. Low toxicity;
6. Low cost; and
7. Reduced impact on the environment.

The microcapsules of the composition of the present invention contain Clomazone.

The microcapsules have a wall comprising a urea-formaldehyde resin. The resin is formed from the reaction of urea-formaldehyde prepolymer and a cross-linking agent. The weight ratio of urea to formaldehyde in the resin is preferably from 1:0.5 to 1:3.0, more preferably from 1:1 to 1:2.5.

The microcapsules may contain only Clomazone. More preferably, Clomazone is present in the microcapsules together with a liquid carrier.

The liquid carrier is immiscible with water. The liquid carrier preferably comprises one or more fatty acid esters of C₁-C₄ alkanols. Preferably, the fatty acid esters are present in an amount such that the one or more fatty acid esters of C₁-C₄ alkanols amount to about 40 to about 99.8% by weight of the final composition. The liquid carrier can further comprise one or more additional formulating ingredients such as other substances used as liquid carriers.

The fatty acid portions of the fatty acid esters consist of a carboxylate moiety bound to a hydrocarbon chain, which can be unbranched or branched, but is typically unbranched in natural sources. The hydrocarbon chain can be saturated or unsaturated. Typically the hydrocarbon chain is saturated (that is an alkyl chain) or contains 1 or 2 carbon-carbon double bonds (that is an alkenyl chain). Fatty acid esters formed from fatty acids containing an odd number of carbon atoms (that is an even number of carbon atoms in the hydrocarbon chain) are useful in the compositions of the present invention, as well as fatty acid esters formed from fatty acids containing an even number of carbon atoms (that is an odd number of carbon atoms in the hydrocarbon chain). However, fatty acids obtained from natural sources typically contain an even number of carbon atoms, and therefore esters of fatty acids containing an even number of carbon atoms are preferred for reason of commercial availability and cost. Fatty acid compositions obtained from natural sources (for example, seed oils) typically consist of fatty acids having a range of chain lengths and different degrees of saturation. Fatty acid ester compositions derived from such fatty acid mixtures are generally useful in the compositions of the present invention without the need to first separate the fatty acid esters.

Fatty acids contain at least 4 carbon atoms and are limited to about 22 carbon atoms from natural sources. Although esters of lower fatty acids (for example, containing as few a 4 carbon atoms) are useful for the composition of the present invention, esters of fatty acids having at least 8, more preferably at least 10, carbon atoms are preferred because of favorable physical properties (for example, low volatility). Esters of lower fatty acids can be mixed with esters of higher fatty acids to decrease polarity, water solubility and volatility. As fatty acids obtained from natural sources typically contain 8 to 22 carbon atoms, more typically 10 to 22 carbon atoms, esters of these fatty acids are preferred for reason of commercial availability and cost. The C₁₀-C₂₂ fatty acid esters with an even number of carbon atoms are, for example, erucic acid, lauric acid, palmitic acid, stearic acid, oleic acid, linoleic acid and linolenic acid. Preferably the one or more fatty esters in the compositions of the present invention comprise at least about 80%, more preferably at least 90%, by weight of esters of fatty acids containing 8 to 22 carbon atoms, preferably 12 to 20 carbon atoms and more preferably 16 to 18 carbon atoms.

Fatty acid compositions obtained from natural sources (for example, seed oils) typically consist of fatty acids having a range of chain lengths and different degrees of saturation. Fatty acid ester compositions derived from such fatty acid mixtures can be useful in the compositions of the present invention without need to first separate the fatty acid esters. Suitable fatty acid ester compositions obtained from plants include seed and fruit oils of sunflower, rapeseed, olive, corn, soybean, cotton and linseed. Of note is a composition of the present invention wherein the one or more fatty acid esters comprise fatty acid methyl esters derived from seed oils of sunflower, soybean, cotton or linseed. Of particular note is a composition of the present invention wherein the one or more fatty acid esters comprise fatty acid methyl esters derived from soybean oil (also known as methylated soybean oil or methyl soyate).

Fatty acid esters of alkanols and methods for their preparation are well known in the art. For example, "biodiesel" typically comprises fatty acid esters of ethanol or more commonly methanol. Two principal routes used to prepare fatty acid alkanol esters are transesterification starting with another fatty acid ester (often a naturally occurring ester with glycerol) and direct esterification starting with the fatty acid. A variety of methods are known for these carrying out these synthesis routes. For example, direct esterification can be accomplished by contacting a fatty acid with an alkanol in the presence of a strong acid catalyst such as sulfuric acid. Transesterification can be accomplished by contacting a starting fatty acid ester with the alcohol in the presence of a strong acid catalyst such as sulfuric acid but more commonly a strong base such as sodium hydroxide.

Alkylated seed oils are the transesterification products of seed oils with an alkanol. For example methylated soybean oil, also known as methyl soyate, comprises methyl esters produced by the transesterification of soybean oil with methanol. Methyl soyate thus comprises methyl esters of fatty acids in the approximate molar ratio that the fatty acids occur esterified with glycerol in soybean seed oil. Alkylated seed oils such as methyl soyate can be distilled to modify the proportion of methyl fatty acid esters.

The weight ratio of Clomazone, to the liquid carrier within the capsules is preferably from 1:2 to 1:99, more preferably from 1:3 to 1:99, still more preferably from 1:4 to 1:99. In one preferred composition, there are present 1 to 10 parts by weight of Clomazone and 40 to 99 parts by weight of the liquid carrier.

The urea-formaldehyde resin forming the shell of capsules comprises a cross-linking agent. The cross-linking agent is a glycoluril resin. In particular, the glycoluril resin is selected for the undercoat or hole blocking layer. The glycoluril resin is generated from the condensation product of glycoluril and an aldehyde. Suitable aldehydes are known and include, for example, formaldehyde, paraformaldehyde, acetaldehyde, butyraldehyde, paraldehyde, glyoxal, furfuraldehyde, propinonaldehyde, benzaldehyde, and mixtures thereof. In preferred embodiments, specific aldehydes selected as a reactant are formaldehyde, acetaldehyde, and butyraldehyde.

Glycoluril resin examples selected as the cross-linking agent are disclosed in US 2011/0269063 and are represented by the following formula: 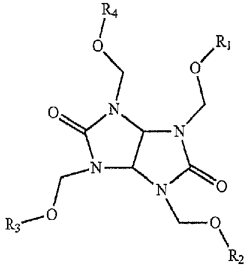 wherein R₁, R₂, R₃, and R₄ each independently represents a hydrogen atom or an alkyl with, for example, 1 to about 12 carbon atoms, 1 to about 8 carbon atoms, 1 to about 6 carbon atoms, or with 1 to about 4 carbon atoms.

The glycoluril resin can be water soluble, dispersible, or indispersible. Examples of the glycoluril resin include highly alkylated/alkoxylated, partially alkylated/alkoxylated, or mixed alkylated/alkoxylated, and more specifically, the glycoluril resin can be methylated, n-butylated, or isobutylated. Specific examples of the glycoluril resins include CYMEL® 1170, 1171 and 1172. CYMEL® glycoluril resins are commercially available from CYTEC Industries, Inc.

The normally liquid, substantially fully mixed-alkylated, substantially fully methylolated acetylene carbamide are a class of cross-linking agents, the starting material of which is acetylene carbamide, which is also known as acetylene diurea, and which is prepared by reacting two moles of urea with one mole of glyoxal. The chemical name for acetylene carbamide is tetrahydroimidazo-(4, 5-d) imidazole 2, 5(1 H, 3H)-dione. The acetylene carbamide can be fully methylolated by reacting one mole of acetylene carbamide with four moles of formaldehyde. The resulting product is identified as tetramethylol acetylene carbamide. The tetramethylol acetylene carbamide is then reacted with a selected amount of methanol so as to partially methylate the fully methylolated acetylene carbamide which is then followed by alkylation with a higher aliphatic monohydric alcohol containing from two to four carbon atoms. These monohydric alcohols may be primary or secondary alcohols. These higher monohydric aliphatic alcohols containing from two or four carbon atoms may be ethanol, n-propanol, isopropanol, n-butanol, isobutanol and the like. It is sometimes advantageous to fully methylate the tetramethylol acetylene carbamide and then by use of a transetherification reaction incorporate the desired measure of ethanol, propanol or butanol into the acetylene carbamide derivative.

These fully etherified, fully methylolated acetylene carbamide derivatives are not considered to be resinous materials since they are, as individual entities, simple pure compounds or mixtures of simple pure compounds but they are potential resin-forming compounds which enter into chemical reaction with certain ionic water-dispersible, non-gelled polymeric materials when subjected to heat and particularly when subjected to heat under acidic conditions. The concept of the degree of methylation or more broadly alkylation, on average, and the concept of the degree of methylolation, on average, will be discussed herein below in order that this concept may be fully understood.

Theoretically, it is possible to methylolate acetylene carbamide fully, that is, to produce tetramethylol acetylene carbamide. However, frequently, a commercial composition purporting to be tetramethylol acetylene carbamide, when analyzed, may show a fractional degree of methylolation. It is well recognized that fractional methylolation is not considered to be possible. As a consequence, when a composition contains upon analysis a degree of methylolation of 3.70, 3.80, or 3.90, it has to be recognized that this is but an average degree of methylolation of the acetylene carbamide compound and establishes that the aforementioned methylol composition is composed of a mixture of a preponderant amount of tetramethylol acetylene carbamide with comparatively minor amounts of trimethylol acetylene carbamide and, perhaps, insignificant amounts including traces of such derivatives as dimethylol acetylene carbamide and even monomethylol acetylene carbamide. The same concept of averages is also applicable to the alkylation or etherification of the tetramethylol acetylene carbamide composition. There cannot be, based on present reasoning, a fractional alkylation and, as a consequence, when upon analysis, a given composition shows that the degree of methylation is, on average, between about 0.9 and 3.60 and that the higher alkylation has an average degree of ethylation, propylation and/or butylation, on average, correspondingly between about 2.80 and 0.40, it must be concluded that there is present in such a composition a plurality of the mixed ethers of the tetramethylol acetylene carbamide. For example, there may be present some monomethyl ether, triethyl ether of tetramethylol acetylene carbamide, some dimethyl ether, diethyl ether of tetramethylol acetylene carbamide, some trimethyl ether, monoethyl ether of tetramethylol acetylene carbamide. There may even be traces of the tetramethyl ether of tetramethylol acetylene carbamide. There may also be present with the varying methyl ethers of tetramethylol acetylene carbamide varying mono, di and tri ethyl ethers, mono, di and tri propyl ethers and mono, di and tri butyl ethers of tetramethylol acetylene carbamide. It is possible to produce a monomethyl ether, monoethyl ether, monopropyl ether, monobutyl ether of tetramethylol acetylene carbamide which could be classed as a tetramixed-alkylated derivative. It is generally preferred, however, to make use of only one higher monohydric alcohol containing from two to four carbon atoms with the methyl alcohol in making a mixed full ether of the tetramethylol acetylene carbamide. The dimixed-alkylated products are therefore, preferred although one could prepare and utilize the trimixed-alkylated derivatives as well as the tetramixed-alkylated derivatives.

In a further aspect, the present invention provides a method for preparing a microencapsulated composition comprising an encapsulated active ingredient, the method comprising:
a) preparing a urea-formaldehyde prepolymer by the reaction of urea and formaldehyde;
b) dispersing the active ingredient and a water insoluble liquid carrier in an aqueous phase to form an emulsion; and
c) adding the urea-formaldehyde prepolymer and a cross-linking agent to the emulsion, wherein the cross-linking agent is a glycoluril resin, and allowing the components thereof to react to form microcapsule walls at the interface of the dispersed organic phase and the aqueous phase, so as to encapsulate the organic phase.

The method comprises first forming a urea-formaldehyde prepolymer in an aqueous phase. The formation of the prepolymer may be represented by the following reaction sequences (1) and (2):

H2N-CO-NH2 + CH2O → H2N-CO-NH-CH2OH (mono methylol urea) (1)

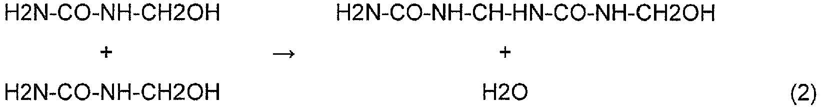

An organic phase comprising the active ingredient, in a liquid carrier, for example an oil such as vegetable oil, is formed. The organic phase is dispersed in an aqueous phase to form a stable emulsion. Suitable adjuvants may be included in either the aqueous phase and/or the organic phase to stabilize the emulsion, as known in the art.

The urea-formaldehyde prepolymer is added to the emulsion, together with a cross-linking agent, if employed, and the mixture allowed to react to form microcapsules containing the organic phase. During the reaction, the polymer wall of the microcapsules is formed at the interface between the organic and aqueous phases in the emulsion, thereby encapsulating the organic phase.

The urea-formaldehyde prepolymer may be formed by the following procedure:
Urea is dissolved in an aqueous formaldehyde solution. The formaldehyde solution may have a concentration of from 30 to 40% by weight of formaldehyde in water. As noted above, the weight ratio of urea to formaldehyde is preferably from 1: 1 to 2. 5. The pH of the mixture is preferably adjusted to 7.0 to 9.0. The reaction is effected by heating to a temperature of from 60 to 80°C, with the reaction mixture kept at this temperature for from 0.5 to about 3 hours, to generate a viscous transparent liquid. Distilled water may then be added to dilute the mixture, and a stable urea-formaldehyde prepolymer aqueous solution is obtained.

The organic phase is obtained by combining the liquid carrier, as discussed above, with the active ingredient, in particular Clomazone. The organic phase is then dispersed in water, with shear, to obtain a stable emulsion. The droplet size of the dispersed organic phase may be controlled by the amount of shear applied to the mixture, which in turn controls the eventual size of the microcapsules.

An emulsifier and/or a stabiliser may be added, to provide a stable dispersion of the organic phase in water. Suitable emulsifiers and stabilisers are discussed below.

The emulsion may then be cooled, for example to a temperature of from 0 to 5°C. The pH is preferably adjusted to an alkaline condition, preferably a pH of from 8 to 10 by the addition of a base, for example sodium hydroxide. The urea-formaldehyde prepolymer is added to the emulsion. If employed, the cross-linking agent is then added. The mixture is then allowed to react, for example from 40 to 60 minutes, after which the resulting mixture may be heated from 30 to 50°C.

A viscosity agent may be added to form a stable dispersion of microcapsules in water. The viscosity agent may be one or more ethyl cellulose, xanthan gum, polyvinyl alcohol, and polyacrylic acid sodium.

An embodiment of the method of the present invention is as follows:
a. Preparation of urea - formaldehyde prepolymer: Urea is dissolved in 30%∼ 40% formaldehyde solution, mass ratio of urea to formaldehyde is 1: 1-2. 5. The mixture is stirred to ensure the urea is completely dissolved. The pH is adjusted to from 7.0 to 9.0 and the mixture heated to 60 - 80 C. The mixture is allowed to react for 0.5 ∼ 3h, to generate a viscous transparent liquid. Distilled water is then added to dilute the mixture, ratio of formaldehyde to distilled water is 1: 1 to 3. A stable urea-formaldehyde prepolymer aqueous solution is obtained.
b. Preparation of emulsion: Clomazone, emulsifiers, the liquid carrier and a stabilizer are combined with deionized water. The resulting mixture is homogenized by stirring at 3000 - 10000r/min speed for 5 - 30min. A stable oil in water emulsion is obtained.
c. Crosslink: The emulsion is cooled to a temperature of 0 - 5°C and the pH adjusted to 8-10 by the addition of 20% sodium hydroxide solution. The urea - formaldehyde prepolymer and crosslinker are added and the resulting mixture allowed to react for 40 - 60min, after which the mixture is slowly warmed to 30 - 50°C. A viscosity agent is added to obtain a stable Clomazone CS formulation.

The microcapsules may have any suitable particle size. The average particle size of the microcapsules will generally range from about 1 to about 130 microns, preferably from 1 to 100 microns, more preferably from 1 to 75 microns, with a preferred average particle size of about 1 to 50 microns. Such relatively fine particles are advantageous to prevent plugging of orifices in the spraying equipment used for field application of pesticide compositions. The microcapsule size may be controlled during the manufacturing process by controlling the degree of dispersion of the material to be encapsulated and the water-immiscible organic phase in the aqueous phase. This may be achieved, for example, by controlling the degree of agitation of the multi-phase mixture and the number, type and amount of emulsifying agents present in the continuous phase.

The wall thickness of the microcapsules may be selected according to the intended use of the composition. The wall thickness of the polyurea microcapsules preferably ranges from about 0.01 to 4 microns, with from about 0.01 to 1 microns thickness being preferred. The thickness of the capsule wall, as well as the degree of cross-linking of the polymer constituting the same, will affect the rate of diffusion of the active ingredient therethrough, and thereby influence the performance of the composition when in use. The microcapsule wall thickness may be controlled, for example, by the quantity of the reactive intermediate present in the water-immiscible phase to be encapsulated.

The composition of the present invention is preferably in the form of a capsule suspension (CS) formulation. Components of the CS formulation are known in the art.

Typically the compositions of the present invention include one or more emulsifiers to assist in forming a dispersion when the compositions are added to water in a spray tank. These emulsifiers can be cationic, anionic or nonionic, but are more typically anionic or nonionic. Examples of particularly suitable anionic surfactants for this purpose are sulfonates such as calcium dodecyl benzenesulfonate. Examples of particularly suitable nonionic surfactants are polyoxyethylated (POE) sorbitan esters, such as POE (20) sorbitan trioleate and polyoxyethylated (POE), sorbitol esters such as POE (40) sorbitol hexaoleate. POE (20) sorbitan trioleate is commercially available under the trade name TWEEN 85 marketed by Uniqema. POE (40) sorbitol hexaoleate is commercially available under the tradenames ATLAS G1086 and CIRRASOL G1086 marketed by Uniqema. Combination of a POE sorbitan ester with a POE sorbitol ester allows optimizing the HLB (hydrophilic-lipophilic balance) value of the surfactant to obtain the highest quality emulsion (smallest suspended droplets) when the composition is added to water. High quality of emulsions typically leads to optimal herbicidal performance. Therefore, of particular note for optimal herbicidal performance is a composition of the present invention comprising one or more nonionic surfactants selected from polyoxyethylated (POE) sorbitan esters such as POE (20) sorbitan trioleate and polyoxyethylated (POE) sorbitol esters such as POE (40) sorbitol hexaoleate and mixtures thereof.

Lignosulfonates have been surprisingly discovered to considerably increase the chemical stability of herbicides in mixtures with fatty acid alkanol esters in the compositions of the present invention. The amount of the one or more lignosulfonates in the compositions of the present invention can range from about 0.1 to about 20% by weight, but for reasons of cost the amount is typically no more than about 10%, preferably no more than about 8%, more preferably no more than about 6% and most preferably no more than about 5% of the composition by weight. Typically the one or more lignosulfonates amount to at least about 0.5% of the composition by weight, although lesser amounts down to about 0.1% can be used. More typically the one or more lignosulfonates amount to at least about 1% of the composition and even more typically at least about 2% of the composition by weight. The amount of lignosulfonates needed to provide a desired degree of stability depends upon the herbicide and other ingredients in the composition, and can be determined by simple experimentation.

Lignin, the basic building block of the lignosulfonates is formed in woody plants and is a complex natural polymer with regard to structure and homogeneity. Lignosulfonates are sulfonated plant lignins and are commercially well known coproducts of the paper industry. The lignosulfonates can be prepared by a chemical modification of the basic lignin building block using a sulfite pulping process or a kraft pulping (also known as sulfate pulping) process including subsequent sulfonation. These pulping processes are well known in the paper industry. The sulfite pulping process and the kraft pulping process are described in literature published by Lignotech (e.g., "Specialty Chemicals for Pesticide Formulations", October, 1998) and MeadWestvaco Corp (e.g., "From the Forests to the Fields", June, 1998). Crude lignosulfonate preparations typically contain in addition to sulfonated lignin other plant derived chemicals such as sugars, sugar acids and resins, as well as inorganic chemicals. Although such crude lignosulfonate preparations can be used for the compositions of the present invention, preferably the crude preparations are first refined to provide higher purity of lignosulfonate. Lignosulfonates within the context of the present disclosure and claims also include lignosulfonates that have been extensively chemically modified. Examples of lignosulfonates that have been extensively chemically modified are oxylignins in which the lignin has been oxidized in a process reducing the number of sulfonic acid and methoxyl groups and causing rearrangements increasing the number of phenolic and carboxylic acid groups. An example of an oxylignin is VANISPERSE A marketed by Borregaard LignoTech.

Lignosulfonates vary according to cation, degree of sulfonation and average molecular weight. The lignosulfonates may contain sodium, calcium, magnesium, zinc, potassium or ammonium cations or mixtures thereof, but preferably contain sodium cations. The degree of sulfonation is defined as the number of sulfonate groups per 1000 unit molecular weight of lignosulfonate and in commercially available products typically ranges from about 0.5 to about 4.7. The lignosulfonates in the compositions of the present invention preferably contain a degree of sulfonation ranging from about 0.5 to about 3.0. Lignosulfonates containing a degree of sulfonation from about 0.5 to about 3.0 can be prepared by controlled sulfonation in the kraft pulping process. For example, the degree of sulfonation using the kraft pulping process is 2.9 for REAX 88A, 0.8 for REAX 85A and 1.2 for REAX 907, which are described further below. Average molecular weight of commercially available lignosulfonates typically range from about 2,000 to about 15,100. The lignosulfonates preferably have an average molecular weight above about 2,900.

Examples of commercially available refined lignosulfonate products useful in the compositions of the present invention include, but are not limited to, REAX 88A (sodium salt of a chemically modified low molecular weight kraft lignin polymer solubilized by five sulfonate groups, marketed by MeadWestvaco Corp.), REAX 85A (sodium salt of a chemically modified high molecular weight kraft lignin polymer, marketed by MeadWestvaco Corp.), REAX 907 (sodium salt of a chemically modified high molecular weight kraft lignin polymer, marketed by MeadWestvaco Corp.), REAX 100M (sodium salt of a chemically modified low molecular weight kraft lignin polymer marketed by MeadWestvaco Corp.) and Kraftspearse DD-5 (sodium salt of a chemically modified high molecular weight kraft lignin polymer, marketed by MeadWestvaco Corp.).

The compositions of the present invention can include, as one or more additional formulating ingredients, additional surfactants besides lignosulfonates. The properties of these additional surfactants include dispersants and wetting agents. The surfactants can be nonionic or ionic (for example, anionic) and can include polymeric moieties such as polyoxyethylation. Typical surfactants are described in McCutcheon's Detergents and Emulsifiers Annual, Allured Publ. Corp., Ridgewood, N.J., as well as Sisely and Wood, Encyclopedia of Surface Active Agents, Chemical Publ. Co., Inc., New York, 1964. Examples of surfactants include polyethoxylated alcohols, polyethoxylated alkylphenols, polyethoxylated sorbitan fatty acid esters, polyethoxylated sorbitol fatty acid esters, dialkyl sulfosuccinates, alkyl sulfates, alkylbenzene sulfonates, organosilicones, N,N-dialkyltaurates, lignin sulfonates, naphthalene sulfonate, formaldehyde condensates, polycarboxylates, glycerol esters, polyoxyethylene/polyoxypropylene block copolymers, and alkylpolyglycosides where the number of glucose units, referred to as degree of polymerization (D.P.), can range from 1 to 3 and the alkyl units can range from C₆ to C₁₄ (see Pure and Applied Chemistry 72, 1255-1264).

In a further aspect, the present invention provides the use of a composition as hereinbefore described in the control of plant growth at a locus.

In a still further aspect, the present invention provides a method of controlling plant growth at a locus comprising applying to the locus a composition as hereinbefore described.

As noted above, the composition may be dispersed in water and applied to the locus as a spray. Such techniques for applying herbicidal compositions by spraying, including the rates of application of the active ingredient, are well known in the art.

In order that the concept of the present invention may be more completely understood, the following examples are set forth in which all parts are parts by weight unless otherwise indicated. These examples are set forth primarily for the purpose of illustration and any specific enumeration of detail contained therein should not be interpreted as a limitation in the present case.

### EXAMPLES

### EXAMPLE 1

### Preparation of acetylene carbamide

Into a suitable reaction vessel equipped with stirrer, thermometer and reflux condenser, there was introduced 765 parts of urea and 875 parts of water. To this slurry, 282 parts of concentrated sulfuric acid was charged and the mixture was heated to 70° C. At 70° C, 605 parts of glyoxal (40% aqueous solution and free from formaldehyde) were added slowly to the clear solution such that the reaction temperature was maintained between 75° - 80° C After the addition of the glyoxal, the reaction mixture was held at 75° C for one hour and then cooled. The separated crystalline acetylene carbamide was filtered and washed with water and with a dilute caustic aqueous solution. The acetylene carbamide obtained after drying had a melting point of 298° - 300° C and the yield was 88% (525 parts).

### Preparation of Tetramethylol acetylene carbamide

Into a suitable reaction vessel equipped with a stirrer, thermometer and reflux condenser, there was introduced 688 parts (10 mol) of aqueous formaldehyde (44%), and the pH was adjusted to 8.7 with 22 parts of 0.5 N NaOH solution. To this solution, there was added 284 parts (2 mol) of acetylene carbamide at 40° C. During the reaction, the temperature was allowed to rise up to 55° C. At this stage, most of the acetylene carbamide had gone into solution. After about 15 minutes, the pH was adjusted to 8.0 with five parts of 0.5 N NaOH. A clear, pale yellow colored solution was obtained. The clear solution was distilled at 50° C, under reduced pressure to remove water, until the reaction vessel content was about 640 parts. The syrup in the vessel was poured into 800 parts of methanol. The white crystalline precipitate was filtered and dried. The total yield of the tetramethylol acetylene carbamide was 483 parts (92%) and melting point of 132° - 136° C.

### Preparation of Dimethoxymethyl Diethoxymethyl acetylene carbamide

Into a suitable reaction vessel, equipped as before, there was charged 320 parts (10 mol) of methanol, 460 parts of ethanol (10 mol), and 20 parts of 70% concentrated nitric acid. To this acidic alcoholic mixture, there was charged 262 parts (1 mol) of tetramethylol acetylene carbamide and the reaction mixture was heated to 40° C, with stirring. In about 20 minutes, all of the tetramethylol acetylene carbamide had gone into solution. When the reaction mixture became clear, it was cooled to 22° C and 45 parts of 20% sodium hydroxide solution were added to neutralize the reaction mixture to a pH of 7-8. The neutralized clear solution was heated slowly to 105° C under reduced pressure to remove substantially all of the alcohol-water mixture. The resultant syrup was filtered hot at 80° C to remove the inorganic salts and other impurities. The yield of the syrupy dimethoxymethyl diethoxymethyl acetylene carbamide was 320 parts. The structure of this product was confirmed by nuclear magnetic resonance spectroscopy. The pan solids were 95.0% and the foil solids were 98.5%. The Gardner-Holdt viscosity was Z₃ - Z₄ (at 25° C). The product was soluble in water as well as in benzene.

### Preparation of Methylated Ethylated acetylene carbamide

Into a suitable reaction vessel, equipped as before, there was introduced 142 parts (1 mol) of acetylene carbamide and 300 parts (4.4 mol) of aqueous formaldehyde (44%), and the pH was adjusted to 7.5 - 8.0 with about 6 parts of 0.5 N NaOH solution. The reaction mixture was heated to 80° C for 15 minutes. The pH of the reaction mixture was adjusted again with 0.5 N NaOH solution to about 7 - 7.5. The resultant pale yellow colored solution of tetramethylol acetylene carbamide was distilled at 50° C under reduced pressure until the weight of the syrup in the reaction vessel was between about 305 - 310 parts. To this syrup, 160 parts (5 mol) of methanol and 6 parts of concentrated nitric acid was added at 50° C. There was a slight exotherm after the addition. The reaction temperature was held at about 55° - 60° C for 30 minutes and later cooled to 22° C and neutralized to a pH of 7-8 with a 20% NaOH solution. It was then slowly heated to 105° C under reduced pressure to remove substantially all of the alcohol and water. To the resulting syrup, 92 parts (2 mol) of ethanol and 4 parts of nitric acid were added and the charge was heated to about 70° C and the reaction mixture held at that temperature for 30 minutes. After cooling the reaction mixture to 22° C, it was neutralized to a pH of 7.5 using a 20% NaOH solution. The neutralized solution was heated slowly to 105° C under reduced pressure, to remove all of the alcohol-water mixture. The resultant syrup was filtered hot at 80° C to remove inorganic salts and other impurities. The yield of the syrup was 320 grams. The foil solids were 99.5 % and the product was soluble in water. The nuclear magnetic resonance analysis indicated that the ratio of methoxy to ethoxy groups in the product was 1:0.63, respectively, that is, an average degree of methylation of about 2.4 and degree of ethylation 1.6.

The procedure for the preparation of the methylated ethylated acetylene carbamide was repeated in all essential details except that during the second alkylation step, 138 parts (3 mol) of ethanol were used. The final syrupy product was soluble in water. The foil solids were 99%. The nuclear magnetic resonance analysis indicated that the ratio of methoxy to ethoxy groups in the product was 1:0.81, respectively. The product was water-soluble and was also soluble in benzene.

### Preparation of Methylated Butvlated acetylene carbamide

The process for the preparation of the methylated ethylated acetylene carbamide set forth hereinabove was repeated in all essential details except that the methylolated acetylene carbamide was first reacted with 192 parts (6 mol) of methanol. The second alkylation was accomplished with n-butanol as follows:
To the syrup obtained after the methylation step there was added 74 parts (1 mol) of n-butanol and 1 part of nitric acid, and the reaction mixture was heated to 105° C for one-half hour, the distillate, which appeared to be methanol, was removed using a Dean-Stark trap. The pale yellow colored solution was cooled to 20° C and neutralized to a pH of 7 - 7.5 with a 0.5 N NaOH solution. The unreacted butanol and any water in the reaction mixture were removed under reduced pressure at 121° C. The resultant approximately 100% solids viscous liquid was analyzed by N.M.R. and found to have a methoxy:butoxy ratio of 1:0.32 respectively, that is, an average degree of methylation of about 3 and a degree of butylation of 1.0. The product remained liquid and did not crystallize on storage at ambient temperature. The product was sparingly soluble in water but was soluble in benzene.

It has been indicated hereinabove that the acetylene carbamide cross-linking agents used in the composition of the present invention may be used to form coating compositions with a plurality of non-gelled polymeric materials such as the acrylic emulsions, as are disclosed in the U.S. Pat. Nos. 3,471,388, 3,661,819 as well as the 3,663,389. Certain polyols may be used with the acetylene carbamide cross-linking agents of the present invention which polyols are disclosed in the U.S. Pat. Nos. 3,959,202 and 3,969,803.

### EXAMPLES 2 TO 6

The composition of raw materials of Examples 2 to 6 is summarized in the following table:

| | | Example | | | | |
|---|---|---|---|---|---|---|
| Step | Material | 2 | 3 | 4 | 5 | 6 |
| a. Urea - formaldehyde prepolymer | Urea (g) | 24 | 17.5 | 43.6 | 30.5 | 37 |
| | 37% formaldehyde (ml) | 40 | 29 | 72.6 | 50.8 | 61.6 |
| | Deionized water (ml) | 80 | 58 | 146 | 110 | 124 |
| b. Preparation of emulsion | Clomazone (g) | 1 | 3.2 | 5.5 | 7.8 | 10 |
| | Emulsifier | 2.5 | 1 | 1.95 | 4 | 2.25 |
| | Liquid carrier | 50 | 40 | 80 | 60 | 80 |
| | Stabilizer | 2.5 | 1 | 1.95 | 4 | 2.25 |
| | Deionized water (g) | 106 | 100 | 120 | 110 | 113 |
| c. Crosslink | Crosslinker | 3.5 | 2 | 5 | 2. 75 | 4.25 |
| | Viscosity agent | 6.5 | 8 | 2 | 5 | 3.5 |

### NOTES:

The emulsifier used in the examples was POE (20) sorbitan trioleate nonionic surfactant (Uniqema TWEEN 85), and POE (40) sorbitol hexaoleate nonionic surfactant (Uniqema ATLAS G1086);

The liquid carrier was C₁₆-C₁₈ fatty acid methyl ester (Cognis Corp. AGNIQUE ME 18SDU,);

The stabilizer used in the examples was lignosulfonate (MeadWestvaco Corp. REAX 88A);

The cross linker used in the examples was Powderlink 1174;

The Viscosity agent used in the examples was xanthan gum.

The microencapsulation compositions of Example 2 to Example 6 were made in accordance with the following sequence of steps:
a. The preparation of urea - formaldehyde prepolymer: urea was dissolved in 30%∼ 40% formaldehyde solution, mass ratio of urea to formaldehyde is 1:1∼2. 5. Stirring the urea to completely dissolve, adjust the pH to 7.0 to 9.0, heating to 60-80 C, the reaction was kept for 0.5 ∼ 3h, to generate a viscous transparent liquid. distilled water was then added to dilute, ratio of formaldehyde to distilled water is 1:1 to 3, a stable urea-formaldehyde prepolymer aqueous solution was obtained;
b. Preparation of emulsion: Clomazone, emulsifiers, liquid carrier and stabilizer were combined in deionized water, and the resulting mixture homogenized in a mixer at 3000 - 10000 r/min speed for 5 - 30 min. A stable oil in water emulsions was obtained.
c. Crosslink: The emulsion was cooled to a temperature of 0 - 5°C, the pH adjusted to 8 - 10 by the addition of 20% sodium hydroxide solution. Urea - formaldehyde prepolymer and the crosslinker were added and the mixture allowed to react for 40 - 60min; and then slowly warmed to 30 - 50°C. The viscosity agent was added to obtain a stable Clomazone CS formulation.

## Claims

1. A composition comprising an active ingredient contained within a microcapsule having a shell comprising a urea-formaldehyde resin; wherein the active ingredient is Clomazone; and wherein the urea-formaldehyde resin is crosslinked, wherein the cross-linking agent is a glycoluril resin.

2. The composition according to claim 1, wherein the microcapsules contain the active ingredient and a liquid carrier; preferably wherein the liquid carrier comprises one or more fatty acid esters of C₁-C₄ alkanols; more preferably wherein the liquid carrier comprises a C₁₆-C₁₈ fatty acid methyl ester.

3. The composition according to any preceding claim, wherein the urea-formaldehyde resin is formed from a prepolymer prepared by the reaction of urea and formaldehyde.

4. The composition according to any preceding claim, wherein the weight ratio of urea to formaldehyde in the resin is from 1:0.5 to 1:3.0; preferably wherein the weight ratio of urea to formaldehyde is from 1:1 to 1:2.5.

5. The composition according to any preceding claim, wherein the glycoluril resin has the general formula: 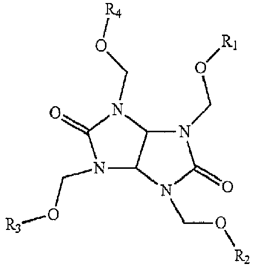 wherein R₁, R_{2,} R_{3,} and R₄ each independently represents a hydrogen atom or an alkyl with, for example, 1 to 12 carbon atoms, 1 to 8 carbon atoms, 1 to 6 carbon atoms, or with 1 to 4 carbon atoms.

6. The composition according to any preceding claim, wherein the microcapsules are suspended in an aqueous medium; preferably wherein the composition further comprises an emulsifier; more preferably wherein the emulsifier comprises a sorbitan ester, a sorbitol ester, or a mixture thereof.

7. The composition according to claim 6, further comprising a stabiliser; preferably wherein the stabiliser is a lignin sulfonate.

8. The composition according to either of claims 6 or 7, further comprising a viscosifying agent; preferably wherein the viscosifying agent is one or more of ethyl cellulose, xanthan gum, polyvinyl alcohol, and polyacrylic acid sodium.

9. The composition according to any preceding claim, wherein the average particle size of the microcapsules is from 1 to 130 microns.

10. The composition according to any preceding claim, wherein the wall thickness of the microcapsules ranges from 0.01micron to 4 microns.

11. A method for preparing a microencapsulated composition comprising an encapsulated active ingredient, the method comprising:
a) preparing a urea-formaldehyde prepolymer by the reaction of urea and formaldehyde;
b) dispersing the active ingredient and a water insoluble liquid carrier in an aqueous phase to form an emulsion, wherein the active ingredient is clomazone; and
c) adding the urea-formaldehyde prepolymer and a cross-linking agent to the emulsion, wherein the cross-linking agent is a glycoluril resin, and allowing the components thereof to react to form microcapsule walls at the interface of the dispersed organic phase and the aqueous phase, so as to encapsulate the organic phase.

12. The use of a composition according to any of claims 1 to 10 in the control of plant growth at a locus.

13. A method of controlling plant growth at a locus comprising applying to the locus a composition according to any of claims 1 to 10.

## Patentansprüche

1. Zusammensetzung, umfassend einen aktiven Inhaltsstoff, der in einer Mikrokapsel enthalten ist, die eine Hülle aufweist, die ein Harnstoff-Formaldehyd-Harz umfasst; wobei der aktive Inhaltsstoff Clomazone ist; und wobei das Harnstoff-Formaldehyd-Harz quervernetzt ist, wobei das Quervernetzungsmittel ein Glycoluril-Harz ist.

2. Zusammensetzung nach Anspruch 1, wobei die Mikrokapseln den aktiven Inhaltsstoff und einen Flüssigkeitsträger enthalten; bevorzugt wobei der Flüssigkeitsträger einen oder mehrere Fettsäureester von C₁-C₄-Alkanolen umfasst; bevorzugter wobei der Flüssigkeitsträger einen C₁₆-C₁₈-Fettsäuremethylester umfasst.

3. Zusammensetzung nach einem vorstehenden Anspruch, wobei das Harnstoff-Formaldehyd-Harz aus einem Präpolymer gebildet ist, das durch die Reaktion von Harnstoff und Formaldehyd zubereitet wird.

4. Zusammensetzung nach einem vorstehenden Anspruch, wobei das Gewichtsverhältnis von Harnstoff zu Formaldehyd in dem Harz 1:0,5 bis 1:3,0 ist; bevorzugt wobei das Gewichtsverhältnis von Harnstoff zu Formaldehyd 1:1 bis 1:2,5 ist.

5. Zusammensetzung nach einem vorstehenden Anspruch, wobei das Glycoluril-Harz die allgemeine Formel aufweist: 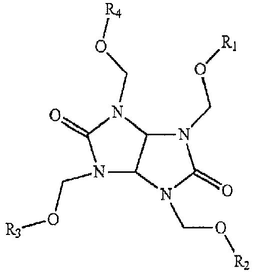 wobei R₁, R₂, R₃ und R₄ jeweils unabhängig ein Wasserstoffatom oder ein Alkyl mit, zum Beispiel, 1 bis 12 Kohlenstoffatomen, 1 bis 8 Kohlenstoffatomen, 1 bis 6 Kohlenstoffatomen oder mit 1 bis 4 Kohlenstoffatomen darstellen.

6. Zusammensetzung nach einem vorstehenden Anspruch, wobei die Mikrokapseln in einem wässrigen Medium suspendiert sind; bevorzugt wobei die Zusammensetzung weiter einen Emulgator umfasst; bevorzugter wobei der Emulgator ein Sorbitanester, ein Sorbitolester oder eine Mischung davon umfasst.

7. Zusammensetzung nach Anspruch 6, weiter umfassend einen Stabilisator; wobei der Stabilisator bevorzugt ein Ligninsulfonat ist.

8. Zusammensetzung nach einem der Ansprüche 6 oder 7, weiter umfassend ein Verdickungsmittel; wobei das Verdickungsmittel bevorzugt eines oder mehreres von Ethylcellulose, Xanthan-Kautschuk, Polyvinylalkohol und Polyacrylsäurenatrium ist.

9. Zusammensetzung nach einem vorstehenden Anspruch, wobei die Durchschnittspartikelgröße der Mikrokapseln 1 bis 130 Mikrometer ist.

10. Zusammensetzung nach einem vorstehenden Anspruch, wobei die Wanddicke der Mikrokapseln von 0,01 Mikrometer bis 4 Mikrometer reicht.

11. Verfahren zum Zubereiten einer mikroverkapselten Zusammensetzung, die einen verkapselten aktiven Inhaltsstoff umfasst, wobei das Verfahren umfasst:
a) Zubereiten eines Harnstoff-Formaldehyd-Präpolymers durch die Reaktion von Harnstoff und Formaldehyd;
b) Dispergieren des aktiven Inhaltsstoffs und eines wasserunlöslichen Flüssigkeitsträgers in einer wässrigen Phase, um eine Emulsion zu bilden, wobei der aktive Inhaltsstoff Clomazone ist; und
c) Zugeben des Harnstoff-Formaldehyd-Präpolymers und eines Quervernetzungsmittels zu der Emulsion, wobei das Quervernetzungsmittel ein Glycoluril-Harz ist, und Erlauben der Komponenten davon zu reagieren, um Mikrokapselwände bei der Grenzfläche der dispergierten organischen Phase und der wässrigen Phase zu bilden, um die organische Phase zu verkapseln.

12. Verwendung einer Zusammensetzung nach einem der Ansprüche 1 bis 10 in der Steuerung von Pflanzenwachstum an einer Stelle.

13. Verfahren zum Steuern von Pflanzenwachstum an einer Stelle, umfassend Anwenden einer Zusammensetzung nach einem der Ansprüche 1 bis 10 an der Stelle.

## Revendications

1. Composition comprenant un ingrédient actif contenu à l'intérieur d'une microcapsule présentant une enveloppe comprenant une résine d'urée-formaldéhyde ; dans laquelle l'ingrédient actif est le clomazone ; et dans laquelle la résine d'urée-formaldéhyde est réticulée, dans laquelle l'agent de réticulation est une résine de glycolurile.

2. Composition selon la revendication 1, dans laquelle les microcapsules contiennent l'ingrédient actif et un véhicule liquide ; de préférence, dans laquelle le véhicule liquide comprend un ou plusieurs esters d'acides gras d'alcanols en C₁-C₄; plus préférentiellement dans laquelle le véhicule liquide comprend un ester méthylique d'acides gras en C₁₆-C₁₈.

3. Composition selon une quelconque revendication précédente, dans laquelle la résine d'urée-formaldéhyde est formée à partir d'un prépolymère préparé par la réaction d'urée et de formaldéhyde.

4. Composition selon une quelconque revendication précédente, dans laquelle le rapport pondéral entre urée et formaldéhyde dans la résine va de 1 :0,5 à 1 :3,0; de préférence dans laquelle le rapport pondéral entre urée et formaldéhyde va de 1 :1 à 1 :2,5.

5. Composition selon une quelconque revendication précédente, dans laquelle la résine de glycolurile présente la formule générale : 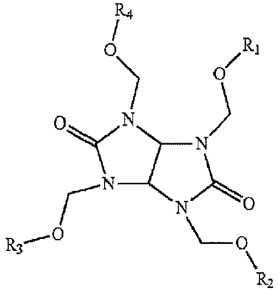 dans laquelle R₁, R₂, R₃, et R₄ représentent chacun indépendamment un atome d'hydrogène ou un alkyle avec, par exemple, 1 à 12 atomes de carbone, 1 à 8 atomes de carbone, 1 à 6 atomes de carbone, ou avec 1 à 4 atomes de carbone.

6. Composition selon une quelconque revendication précédente, dans laquelle les microcapsules sont suspendues dans un milieu aqueux; de préférence dans laquelle la composition comprend en outre un émulsifiant; plus préférentiellement dans laquelle l'émulsifiant comprend un ester de sorbitane, un ester de sorbitol, ou un mélange de ceux-ci.

7. Composition selon la revendication 6, comprenant en outre un stabilisant ; de préférence dans laquelle le stabilisant est un sulfonate de lignine.

8. Composition selon l'une quelconque de la revendication 6 ou de la revendication 7, comprenant en outre un agent améliorant la viscosité ; de préférence dans laquelle l'agent améliorant la viscosité est un ou plusieurs parmi l'éthylcellulose, la gomme de xanthane, l'alcool polyvinylique, et le sodium d'acide polyacrylique.

9. Composition selon une quelconque revendication précédente, dans laquelle la taille de particule moyenne des microcapsules va de 1 à 130 microns.

10. Composition selon une quelconque revendication précédente, dans laquelle l'épaisseur de paroi des microcapsules varie de 0,01 micron à 4 microns.

11. Procédé de préparation d'une composition microencapsulée comprenant un ingrédient actif encapsulé, le procédé comprenant :
a) la préparation d'un prépolymère d'urée-formaldéhyde par la réaction d'urée et de formaldéhyde ;
b) la dispersion de l'ingrédient actif et d'un véhicule liquide non hydrosoluble dans une phase aqueuse pour former une émulsion, dans lequel l'ingrédient actif est le clomazone ; et
c) l'ajout du prépolymère d'urée-formaldéhyde et d'un agent de réticulation à l'émulsion, dans lequel l'agent de réticulation est une résine de glycolurile, et le fait de permettre aux constituants de ceux-ci de réagir pour former des parois de microcapsules au niveau de l'interface de la phase organique dispersée et de la phase aqueuse, de manière à encapsuler la phase organique.

12. Utilisation d'une composition selon l'une quelconque des revendications 1 à 10 dans la régulation de la croissance végétale au niveau d'un locus.

13. Procédé de régulation de la croissance végétale au niveau d'un locus comprenant l'application au locus d'une composition selon l'une quelconque des revendications 1 à 10.
